# EUROPÄISCHE PATENTSCHRIFT

(11) **EP 1 002 960 B1**
(45) Veröffentlichungstag und Bekanntmachung des Hinweises auf die Patenterteilung: **05.01.2005**
(21) Anmeldenummer: 99122436.1
(22) Anmeldetag: 11.11.1999
(51) Int. Cl.: F15B 11/028, F15B 15/20, C03B 11/00

(54) **Pressdruckregelvorrichtung für einen Antriebszylinder eines Werkzeugs oder Werkzeugteils einer IS-Glasmaschine**
Pressing pressure control device for a tool or a tool part of an IS glass machine
Dispositif pour le réglage de pression de presse pour un outil ou une partie d'un outil d'une machine pour la fabrication de verre

(30) Priorität: 18.11.1998 DE 29820590 U
(43) Veröffentlichungstag der Anmeldung: 24.05.2000
(73) Patentinhaber: GPS GLASPRODUKTIONS-SERVICE GMBH, 45329 Essen (DE)
(72) Erfinder: Emrath, Norbert, 45721 Haltern (DE); Springer, Hans-Dieter, 46348 Raesfeld (DE)
(74) Vertreter: Lelgemann, Karl-Heinz, Dipl.-Ing.

(56) Entgegenhaltungen:
- WO-A-98/18732
- DE-A- 1 696 047
- DE-A- 3 418 261
- US-A- 4 662 923
- PATENT ABSTRACTS OF JAPAN vol. 1995, no. 05, 30. Juni 1995 (1995-06-30) & JP 07 033455 A (CANON INC), 3. Februar 1995 (1995-02-03)

## Beschreibung

Die Erfindung bezieht sich auf ein Verfahren zur Steuerung der Druckfluidbeaufschlagung eines Antriebszylinders eines Pegels einer IS-Glasmaschine nach dem Oberbegriff des Patentanspruchs 1.

Bei bekannten derartigen Verfahren werden zur Schaffung der gewünschten Druckbeaufschlagung des Antriebszylinders Druckregelventile vorgesehen, die sich in Seitenständern der IS-Glasmaschine befinden. An einem derartigen Druckregelventil wird ein für die Bewegung des Werkzeugs erwünschter Solldruck ausgewählt, der an dem entsprechenden Druckregelventil eingestellt wird. Über eine Steuereinheit der IS-Glasmaschine wird dann ein Ein-/Aus-Ventil geschaltet, so daß dann die vollständige Bewegung des durch den Antriebszylinder angetriebenen Pegels mit dem am Druckregelventil voreingestellten Solldruck erfolgt.

Aus der US-A-4 662 923 ist ein Verfahren zur Steuerung der Druckfluidbeaufschlagung eines Antriebszylinders eines Pegels einer IS-Glasmaschine bekannt, bei dem die Druckfluidbeaufschlagung des Antriebszylinders mittels eines Druckregelventils gesteuert wird, das zwischen einer Druckfluidquelle und dem Antriebszylinder in einer Fluidleitung angeordnet ist. Der Pegel bzw. Plunger hat im Falle des bekannten Verfahrens drei Positionen, in denen er für einen bestimmten Zeitraum verbleibt. Die Steuerung der Hubbewegung des Plungers erfolgt weg- oder geschwindigkeitsabhängig. Bei den drei Stellungen des Plungers handelt es sich um eine Ruhestellung, eine Zwischenstellung und eine Betriebs- bzw. Pressstellung.

Der Antriebszylinder des Plungers wird bei der Bewegung aus der Ruhestellung in die Zwischenstellung gleichmäßig mit Druck beaufschlagt, bis der Plunger seine Zwischenstellung erreicht hat. Danach wird das Druckregelventil in eine Stellung verbracht, in der der Eintritt oder der Austritt von Druckfluid in den Antriebszylinder verhindert wird, d.h. das Druckregelventil gerät in seine Sperrstellung. Der Plunger verbleibt in der Zwischenstellung, bis ein Glastropfen in die Form eintritt und auf den Plunger trifft. Von diesem Moment an wird der Plunger mittels des Antriebszylinders aus seiner Zwischenstellung in seine Betriebs- bzw. Pressstellung bewegt. Zwischen der Hubbewegung aus der Ruhestellung in die Zwischenstellung und der Hubbewegung aus der Zwischenstellung in die Press- bzw. Betriebsstellung ist bei dem in der US-A-4 662 923 beschriebenen Verfahren jeweils ein Zeitraum vorgesehen, während dem der Plunger in seiner Zwischenstellung verbleibt.

Irgendwelche Angaben hinsichtlich des Verfahrensablaufs bei einem in der US-A-4 662 923 als möglich angedeuteten Verzicht auf die Zwischenstellung gehen aus der genannten Druckschrift nicht hervor.

Der Erfindung liegt die Aufgabe zugrunde, das eingangs geschilderte Verfahren derart weiterzubilden, dass ein Bewegungshub eines mittels dem Antriebszylinder bewegten Pegels schneller und exakter durchführbar ist.

Diese Aufgabe wird erfindungsgemäß durch die Merkmale im kennzeichnenden Teil des Patentanspruchs 1 gelöst. Bei dieser Ausgestaltung des Verfahrens wird ein erheblicher Zuwachs an Geschwindigkeit bei der Bewegung des Pegels erzielt, da während des größten Teils des Bewegungshubs letzterer mit einer vergleichsweise hohen Geschwindigkeit erfolgt, wohingegen erst beim Aufbau von Gegendruck auf das Werkzeug oder Werkzeugteil der voreingestellte Sollwert des Preßdrucks zum Tragen kommt. Das erfindungsgemäße Verfahren ist bei allen IS-Glasmaschinentypen und unterschiedlichen Fertigungsverfahren universell einsetzbar. Vorhandene IS-Glasmaschinen können mit einem vergleichsweise geringen technisch-konstruktivenAufwand entsprechend nachgerüstet werden. Im Vergleich zu bekannten Verfahren kann das erfindungsgemäße Verfahren mit einem erheblich verringerten Raumbedarf realisiert werden, wobei darüber hinaus beim erfindungsgemäßen Verfahren niedrigere Ausfallzeiten anfallen und des weiteren der Wartungsaufwand für die entsprechenden Vorrichtungsteile erheblich reduziert ist.

Vorteilhafte Weiterbildungen des erfindungsgemäßen Verfahrens ergeben sich aus den Unteransprüchen.

Gemäß Patentanspruch 3 kann sichergestellt werden, dass zwischen dem Beginn des Bewegungshubs des Pegels und demjenigen Zeitpunkt, zu dem auf den Pegel ein Gegendruck aufgebaut wird, die Geschwindigkeit entsprechend dem maximal durch das Druckregelventil auf den Antriebszylinder übertragbaren Fluiddruck erfolgt.

Gemäß Patentanspruch 4 lässt sich eine erhebliche Qualitätssteigerung bei den Eigenschaften der mittels des Pegels hergestellten Külbel erreichen. Da ab dem Zeitpunkt, zu dem der Pegel in Berührung mit der zu dem Külbel umzuformenden Glasmasse tritt, der Pressdruck auf den vorgegebenen Sollwert des Pressdrucks hin geregelt wird, ist es möglich, die Külbelformung wesentlich präziser zu gestalten, da, wie bereits erläutert, eine ständige Regelung zwischen dem Soll- und dem Ist-Pressdruck durch das elektropneumatische Druckregelventil erfolgt. Hierdurch ergibt sich im Vergleich zum Stand der Technik eine genauere Pegellaufdruckregulierung; dies resultiert u.a. in einer erheblichen Reduzierung des Ausschusses.

Gemäß Patentanspruch 7 kann der ordnungsgemäße Ablauf eines Pegelhubs hinsichtlich der Einregelung des Pressdrucks auf den Sollwert bequem an einem Display abgelesen werden.

Als zusätzliche manuelle Sicherungsmaßnahme ist die Ausgestaltung gemäß Patentanspruch 8 möglich.

Für eine Auswechselung eines Pegels oder für die Wartung eines Pegels an einer Station ist es vorteilhaft, wenn den Stationen der IS-Glasmaschine Handschalter zugeordnet sind, mittels denen die Pegellaufbewegung manuell steuerbar ist.

Um die aus vorhergehenden Produktionszyklen hervorgegangenen produktionsgünstigsten Daten für die Herstellung eines bestimmten Glasartikels zu speichern, ist die Ausgestaltung gemäß Patentanspruch 9 vorteilhaft. Die sich ergebenden produktionsgünstigsten Daten können dann bei dem nächsten Produktionszyklus für den entsprechenden Artikel ohne weiteres wieder eingespielt werden, so dass nun von Beginn an das optimierte Produktionsprogramm ablaufen kann.

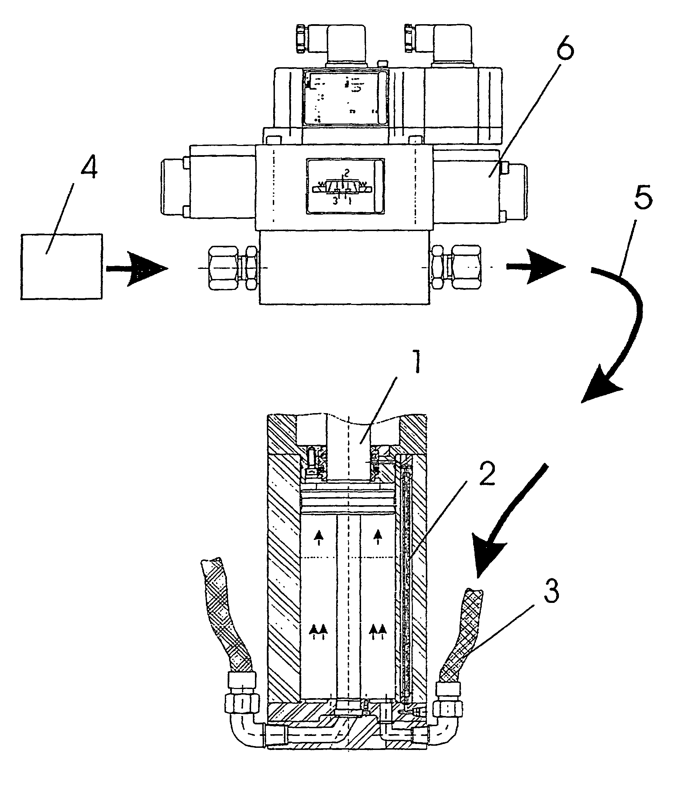

Im folgenden wird die Erfindung an Hand einer Ausführungsform unter Bezugnahme auf die Zeichnung näher erläutert, in deren einziger Figur eine Pressdruckregelvorrichtung zur Durchführung des erfindungsgemäßen Verfahrens prinzipiell dargestellt ist.

Eine im folgenden erläuterte Pressdruckregelvorrichtung wird im Zusammenhang mit einem von ihr hinsichtlich seines Pressdrucks zu regelnden Pegel 1 einer Station einer IS-Glasmaschine beschrieben. Diesem Pegel 1 ist ein pneumatischer Antriebszylinder 2 zugeordnet, der mittels einer Druckluftleitung 3 an eine Druckluftquelle 4 angeschlossen ist. Durch die in der einzigen Figur dargestellten Pfeile 5 wird der Druckfluidstrom zwischen der Druckluftquelle 4 und dem pneumatischen Antriebszylinder 2 dargestellt.

In der Druckluftleitung 3 ist eine Regeleinrichtung in Form eines elektropneumatischen Druckregelventils 6 angeordnet.

Mittels dieses elektropneumatischen Druckregelventils 6 wird der Hub des Pegels 1 bzw. der Pegellauf geregelt. Durch das Druckregelventil 6 kann eine Vielzahl von Komponenten eines herkömmlichen Pegellauf-Pressdrucksystems ersetzt werden.

Dem elektropneumatischen Druckregelventil 6 ist eine ISO3-Grundplatte zugeordnet, über die es separat mit Druckluft aus der Druckluftquelle 4 beaufschlagt wird, wobei die Beaufschlagung mit einem Maximaldruck von etwa 3,5 bar erfolgt.

Innerhalb von Seitensäulen der weiter in der einzigen Figur nicht dargestellten IS-Glasmaschine sind je nach Art und Aufbau der IS-Glasmaschine ein oder mehrere in der Figur ebenfalls nicht dargestellte Schaltkästen vorgesehen.

An diesen Schaltkästen kann mit Hilfe von durch +/-/Tasten leicht einstellbaren Potentiometern für jede Station der IS-Glasmaschine bzw. für jeden an einer Station vorhandenen Pegel 1 der jeweils gewünschte Solldruck für den Pegellauf individuell einjustiert werden. Der einzujustierende Solldruck ergibt sich aus vorhandenen Artikelkarten der jeweils herzustellenden Glasartikel.

Der Wert des Solldrucks kann bequem an einem Display abgelesen werden, wobei ein Soll-/Ist-Umschalter die Differenz zwischen dem Soll- und dem Ist-Wertdruck anzeigt.

Für die Durchführung eines Pegelhubs wird nun von einer Steuereinheit der IS-Glasmaschine ein Signal zur Einleitung der Pegellaufbewegung an das elektropneumatische Druckregelventil 6 angelegt. Das Druckregelventil 6 gerät hierdurch in eine Stellung, in der es seinen eingangsseitigen Luftdruck von maximal 3,5 bar auf den Antriebszylinder 2 weiterleitet. Dieser Zustand wird solange aufrecht erhalten, bis das vom Antriebszylinder 2 angetriebene Werkzeug oder Werkzeugteil bzw. der Pegel 1 nicht auf Gegendruck bzw. die Glasmasse trifft.

Sobald der vom Antriebszylinder 2 angetriebene Pegel 1 auf die Glasmasse und damit auf Gegendruck trifft, regelt das Druckregelventil 6 seinen ausgangsseitigen Luftdruck entsprechend dem am zugeordneten Schaltkasten vorgegebenen Solldruck.

Der Pressvorgang und somit die Külbelformung erfolgt nun unter ständiger Regulierung und Überwachung der Soll- bzw. Ist-Pegellaufdrücke.

Durch die vorstehend geschilderte Regelung des Pegelhubs wird ein erheblicher Geschwindigkeitszuwachs in der Pegellaufbewegung erzielt, da der größte Teil des Pegelhubes, während der kein Kontakt zwischen dem Pegel und der Glasmasse vorherrscht, mit maximaler Geschwindigkeit bzw. mit maximalem Druck zurückgelegt wird, und erst zum Beginn des eigentlichen Pressvorgangs hin mit dem voreingestellten Solldruck in die Glasmasse eingedrungen wird. Des weiteren erfolgt die Ausformung des Külbels wesentlich präziser, da eine ständige Regelung zwischen dem Sollwert und dem Istwert des Pressdrucks durch das Druckregelventil 6 erfolgt.

Es ist denkbar, dass als zusätzliche manuelle Sicherung der ISO3-Ventil- bzw. Grundplatte ein Absperrventil zugeordnet wird, welches bei Bedarf die Hauptdruckluftzufuhr zum Druckregelventil 6 absperrt.

Des weiteren kann mit Hilfe zweier vorformseitiger angebrachter Schalter die Pegellaufbewegung auch manuell zwecks Austausch des Pegels oder zwecks Wartung gesteuert werden.

Es ist möglich, einer Station der IS-Glasmaschine einen Datenlogger zuzuordnen, mittels dem die produktionsgünstigsten Daten eines bestimmten herzustellenden Glasartikels gespeichert werden können. Diese Daten können dann beim nächsten Artikeleinsatz wieder eingespielt werden, wodurch ohne Zeitverzögerung wieder das optimierte Produktionsprogramm gefahren werden kann. Darüber hinaus ist es möglich, den Ablauf zu visualisieren.

## Patentansprüche

1. Verfahren zur Steuerung der Druckfluidbeaufschlagung eines Antriebszylinders (2) eines Pegels (1) einer IS-Glasmaschine, bei dem ein Druckfluid aus einer Druckfluidquelle (4) durch eine Fluidleitung (3) zum Antriebszylinder (2) geführt wird, der Fluiddruck im Antriebszylinder (2) mittels eines zwischen der Druckfluidquelle (4) und dem Antriebszylinder (2) in der Fluidleitung (3) angeordneten elektropneumatischen oder elektrohydraulischen Druckregelventils (6) geregelt wird, das Druckregelventil (6) eingangsseitig mit dem in der Druckfluidquelle (4) herrschenden Fluiddruck beaufschlagt wird, das Druckregelventil (6) in einer ersten Stellung den Druckfluiddurchlass durch die Fluidleitung (3) sperrt, in einer zweiten Stellung seinen eingangsseitigen Fluiddruck auf den Antriebszylinder (2) weiterleitet und in einer dritten Stellung seinen ausgangsseitigen Fluiddruck entsprechend einem vorgegebenen Solldruck regelt, **dadurch gekennzeichnet, dass** das Druckregelventil (6) bei der Hubbewegung des Pegels (1) seine zweite Stellung einnimmt und seinen eingangsseitigen Fluiddruck auf den Antriebszylinder (2) weiterleitet, solange der vom Antriebszylinder (2) angetriebene Pegel (1) nicht auf Gegendruck trifft und aus seiner zweiten in seine dritte Stellung übergeht und den Fluiddruck auf den Antriebszylinder (2) entsprechend dem vorgegebenen Solldruck regelt, sobald der vom Antriebszylinder (2) angetriebene Pegel (1) auf die Glasmasse und damit auf Gegendruck trifft.

2. Verfahren nach Anspruch 1, bei dem der eingangsseitige Fluiddruck des Druckregelventils (6) auf einen Maximalwert, vorzugsweise auf 3,5 bar, begrenzt wird.

3. Verfahren nach Anspruch 1 oder 2, bei der das Druckregelventil (6) mittels einer Steuereinheit aus seiner ersten in seine zweite Stellung gestellt wird.

4. Verfahren nach einem der Ansprüche 1 bis 3, bei dem an einem oder mehreren Schaltkästen in Seitensäulen der IS-Glasmaschine der vorgebbare Solldruck einjustiert wird.

5. Verfahren nach Anspruch 4, bei dem der vorgebbare Solldruck mittels einstellbarer Potentiometer im gewünschten Niveau einjustiert wird.

6. Verfahren nach Anspruch 5, bei dem die Potentiometer mittels +/-/Tasten eingestellt werden.

7. Verfahren nach einem der Ansprüche 4 bis 6, bei dem die Differenz zwischen dem Soll- und dem Ist-Wert des Pressdrucks mittels eines Soll-/Ist-Umschalters angezeigt wird.

8. Verfahren nach einem der Ansprüche 2 bis 7, bei dem die Druckfluidzufuhr zu dem Druckregelventil (6) mittels eines an einer ISO3-Grundplatte angeordneten Absperrventils abgesperrt wird.

9. Verfahren nach einem der Ansprüche 1 bis 8, bei dem die bei Regelungsvorgängen anfallenden Daten mittels eines Datenloggers abgespeichert werden.

## Claims

1. A process for controlling the pressurised fluid supply of a drive cylinder (2) of a level (1) of an IS glass machine, wherein a pressurised fluid is guided from a pressurised fluid source (4) through a fluid line (3) to the drive cylinder (2), the fluid pressure in the drive cylinder (2) is regulated by means of an electropneumatic or electrohydraulic pressure control valve (6) arranged between the pressurised fluid source (4) and the drive cylinder (2) in the fluid line (3), the pressure control valve (6) is supplied on the inlet side with the fluid pressure prevailing in the pressurised fluid source (4), the pressure control valve (6) blocks the pressurised fluid from flowing through the fluid line (3) in a first setting, in a second setting conveys its inlet-side fluid pressure to the drive cylinder (2) and in a third setting regulates its fluid pressure on the outlet side according to a preset set pressure, **characterised in that** the pressure control valve (6) assumes its second setting with the hoisting motion of the level (1) and conveys its fluid pressure on the inlet side to the drive cylinder (2), as long as the level (1) driven by the drive cylinder (2) does not encounter counterpressure and transitions from its second to its third setting and regulates the fluid pressure to the drive cylinder (2) according to the preset set pressure, as soon as the level (1) driven by the drive cylinder (2) encounters the glass mass and thus encounters counterpressure.

2. The process as claimed in Claim 1, wherein the fluid pressure on the inlet side of the pressure control valve (6) is limited to a maximum value, preferably to 3.5 bar.

3. The process as claimed in Claim 1 or 2, wherein the pressure control valve (6) is set by means of a control unit from its first to its second setting.

4. The process as claimed in any one of Claims 1 to 3, wherein the presettable set pressure is adjusted on one or more switchboxes in side columns of the IS glass machine.

5. The process as claimed in Claim 4, wherein the presettable set pressure is adjusted by means of adjustable potentiometers in the desired level.

6. The process as claimed in Claim 5, wherein the potentiometers are adjusted by means of +/- keys.

7. The process as claimed in any one of Claims 4 to 6, wherein the difference between the set and the actual value of the pressing power is indicated by means of a set/actual converter.

8. The process as claimed in any one of Claims 2 to 7, wherein the pressurised fluid supply to the pressure control valve (6) is blocked by means of a stop valve arranged on a IS03 base plate.

9. The process as claimed in any one of Claims 1 to 8, wherein the data accumulating during regulating procedures are stored by means of a data logger.

## Revendications

1. Procédé de commande de la sollicitation par fluide sous pression d'un cylindre d'entraînement (2) d'un poinçon-ébaucheur (1) d'une machine à verre IS, dans lequel un fluide sous pression provenant d'une source de fluide sous pression (4) est introduit par une conduite de fluide (3) vers le cylindre d'entraînement (2), la pression du fluide dans le cylindre d'entraînement (2) est régulée au moyen d'une soupape de régulation de la pression (6) électropneumatique ou électrohydraulique disposée entre la source de fluide sous pression (4) et le cylindre d'entraînement (2) dans la conduite de fluide (3), la soupape de régulation de la pression (6) est sollicitée du côté de l'entrée par la pression du fluide prédominante dans la source de fluide sous pression (4), la soupape de régulation de la pression (6) bloque dans une première position l'écoulement du fluide sous pression dans la conduite de fluide (3), dans une deuxième position transmet sa pression de fluide du côté de l'entrée au cylindre d'entraînement (2) et dans une troisième position régule sa pression de fluide du côté de la sortie en fonction d'une pression de consigne prédéterminée, **caractérisé en ce que** la soupape de régulation de la pression (6) adopte sa deuxième position lors du mouvement de levage du poinçon-ébaucheur (1) et transmet sa pression de fluide du côté de l'entrée au cylindre d'entraînement (2), tant que le poinçon-ébaucheur (1) entraîné par le cylindre d'entraînement (2) ne rencontre pas de contre-pression et passe de sa deuxième position à sa troisième position et régule la pression de fluide sur le cylindre d'entraînement (2) en fonction de la pression de consigne prédéterminée, dès que le poinçon-ébaucheur (1) entraîné par le cylindre d'entraînement (2) bute sur la masse de verre et ainsi sur une contre-pression.

2. Procédé selon la revendication 1, dans lequel la pression de fluide du côté de l'entrée de la soupape de régulation de la pression (6) est limitée à une valeur maximale, de préférence de 3,5 bar.

3. Procédé selon la revendication 1 ou 2, dans lequel la soupape de régulation de la pression (6) est fixée de sa première à sa deuxième position au moyen de l'unité de commande.

4. Procédé selon une des revendications 1 à 3, dans lequel la pression de consigne prédéterminée est ajustée sur un ou plusieurs boîtiers de commutation dans les piliers latéraux de la machine à verre IS.

5. Procédé selon la revendication 4, dans lequel la pression de consigne prédéterminée est ajustée au niveau souhaité au moyen d'un potentiomètre réglable.

6. Procédé selon la revendication 5, dans lequel le potentiomètre est réglé au moyen des touches +/-/.

7. Procédé selon une des revendications 4 à 6, dans lequel la différence entre la valeur de consigne et la valeur effective de la pression de moulage est affichée au moyen d'un commutateur valeur de consigne/ valeur effective.

8. Procédé selon une des revendications 2 à 7, dans lequel l'introduction de fluide sous pression vers la soupape de régulation de la pression (6) est bloquée au moyen d'une soupape d'arrêt disposée sur un socle IS03.

9. Procédé selon une des revendications 1 à 8, dans lequel les données recueillies lors des procédures de réglage sont mémorisées au moyen d'un enregistreur de données.
